# DEMANDE DE BREVET EUROPEEN

(11) **EP 1 324 562 A1**
(43) Date de publication de la demande: **02.07.2003**
(21) Numéro de dépôt: 02080254.2
(22) Date de dépôt: 11.12.2002
(51) Int. Cl.: H04L 29/06

(54) **Système de communication de données selon un principe de commutation par paquets**

(30) Priorité: 20.12.2001 FR 0116575
(71) Demandeur: Koninklijke Philips Electronics N.V., 5621 BA Eindhoven (NL)
(72) Inventeur: Duranton, Marc, Societe Civile S.P.I.D., 75008 Paris (FR); Pasquier, Laurent, Societe Civile S.P.I.D., 75008 Paris (FR); Rivierre, Valérie, Societe Civile S.P.I.D., 75008 Paris (FR); Zhao, Qin, Societe Civile S.P.I.D., 75008 Paris (FR)
(74) Mandataire: Chaffraix, Jean

(57) **Abrégé**

La présente invention concerne un système de communication de données comprenant des dispositifs de routage (11,12,13,14) desdites données, reliés entre eux par des liens de communication, les données étant transmises par paquets, un paquet comportant un en-tête. Une partie émettrice d'un premier dispositif de routage (12) comprend des premiers moyens de stockage aptes à stocker une valeur d'au moins un paramètre dudit en-tête et à émettre une valeur codée lui correspondant, et des premiers moyens de compression selon un codage entropique, aptes à recoder la valeur non-codée, la valeur recodée étant stockée à la place de la valeur codée après transmission de cette dernière sur un lien de communication (15). Une partie réceptrice d'un second dispositif de routage (13), relié au premier dispositif de routage par le lien de communication, comprend des seconds moyens de stockage aptes à stocker la valeur codée issue du lien de communication (15) et à émettre la valeur non-codée lui correspondant, et des seconds moyens de compression selon le codage entropique, aptes à recoder la valeur non-codée, la valeur recodée étant stockée à la place de la valeur codée.

## Description

### Domaine technique de l'invention

La présente invention concerne un système de communication de données comprenant des dispositifs de routage desdites données, reliés entre eux par des liens de communication, les données étant transmises par paquets, un paquet comportant un en-tête.

Elle concerne également un dispositif de routage apte à émettre ou à recevoir des données dans un tel système de communication.

Elle concerne enfin un procédé de transmission de données entre un dispositif d'émission et un dispositif de réception reliés entre eux par un lien de communication.

Elle trouve notamment son application dans les réseaux de communication, qui acheminent les données selon un modèle de commutation par paquets (en anglais 'packetswitching model').

### Etat de la technique antérieure

Dans un protocole de commutation par paquets, les messages sont divisés en paquets avant d'être envoyés. Chaque paquet est alors transmis individuellement et peut suivre différents itinéraires d'un noeud source vers un noeud destination du réseau de communication. Une fois que tous les paquets formant un message sont arrivés à destination, ils sont réunis de manière à former le message original. La plupart des réseaux de communication sont basés sur des technologies de commutation par paquets. En revanche, le service téléphonique normal est basé sur une technologie de commutation par circuits (en anglais 'circuit-switching') dans laquelle une ligne est assignée à la transmission d'un message entre deux noeuds du réseau. La commutation par circuits est idéale quand des données doivent être transmises rapidement et doivent arriver dans l'ordre dans lequel elles ont été envoyées. La commutation par paquets est plus efficace et robuste pour les données qui peuvent tolérer un délai de transmission, comme par exemple des messages de type courrier électronique.

Dans un réseau de communication basé sur la commutation par paquets, un paquet constitue l'entité élémentaire qui est transmise, lors d'une étape de routage du message, d'un noeud émetteur du réseau vers un noeud récepteur du réseau via un lien de communication. Selon le procédé de routage, les paquets peuvent ou non former des files d'attente au niveau de chaque noeud du réseau, les files d'attente étant de préférence les moins longues possibles. Chaque paquet comprend un en-tête (en anglais 'header') et des données, un en-tête comprenant :
- une adresse du noeud source,
- une adresse du noeud de destination,
- la taille du paquet, ou un mot de contrôle, ou rien dans le cas de paquets de taille fixe,
- un identificateur de message, et
- un identificateur de paquet.

Cependant, l'en-tête lui-même a une contribution à la taille du paquet. Par conséquent, un message divisé en paquets prend plus de place que le message d'origine, ce qui a pour effet de réduire la bande passante du réseau de communication.

La demande de brevet EP 1081910 décrit une méthode de transmission de données par paquets sur un réseau de communication, ladite méthode comprenant des étapes de compression et de décompression des paquets, et plus particulièrement des en-têtes de paquets. Selon cette méthode, la compression des en-têtes s'effectue par différence entre le paquet précédent et le paquet courant avec transmission de bits d'erreur. Un noeud de réception a alors en charge de détecter les éventuelles erreurs de transmission. Il en informe ensuite les noeuds intermédiaires qui décident alors de compresser ou de décompresser les paquets incluant les en-têtes.

Cette méthode tire profit des redondances temporelles entre deux paquets successifs mais peut cependant se révéler inefficace pour certaines configurations. De plus, la gestion des erreurs de transmission rend la méthode complexe à mettre en oeuvre.

### Exposé de l'invention

La présente invention a pour but de proposer un système de communication entre un dispositif d'émission de données et un dispositif de réception de données, qui soit à la fois plus simple et plus efficace.

A cet effet, le système de communication selon l'invention est remarquable en ce que :
- une partie émettrice d'un premier dispositif de routage comprend des premiers moyens de stockage aptes à stocker une valeur d'au moins un paramètre dudit en-tête et à émettre une valeur codée lui correspondant, et des premiers moyens de compression selon un codage entropique, aptes à recoder la valeur non-codée, la valeur recodée étant stockée à la place de la valeur codée après transmission de cette dernière sur un lien de communication, et
- une partie réceptrice d'un second dispositif de routage, relié au premier dispositif de routage par le lien de communication, comprend des seconds moyens de stockage aptes à stocker la valeur codée issue du lien de communication et à émettre la valeur non-codée lui correspondant, et des seconds moyens de compression selon le codage entropique, aptes à recoder la valeur non-codée, la valeur recodée étant stockée à la place de la valeur codée.

La présente invention permet de modifier la compression selon un codage entropique des en-têtes, au niveau de chaque dispositif de routage du système de communication fonctionnant en émission ou en réception, de manière à l'adapter à une probabilité de présence desdits en-têtes sur le lien de communication. Ainsi, un en-tête de paquet sera codé plusieurs fois sur son parcours car chaque lien de communication entre deux dispositifs a ses propres probabilités. Un tel codage adaptatif permet d'accroître de façon simple, sans l'ajout d'information supplémentaire, l'efficacité de la transmission de données, et par conséquent de réduire la bande passante du réseau de communication.

### Brève description des dessins

Ces aspects de l'invention ainsi que d'autres aspects plus détaillés apparaîtront plus clairement grâce à la description suivante de plusieurs modes de réalisation de l'invention, donnés à titre d'exemples non limitatifs et en regard des dessins annexés parmi lesquels :
- la Fig. 1 représente un réseau de communication,
- la Fig. 2 représente un noeud du réseau de communication correspondant à un dispositif de commutation selon un mode de réalisation connu de l'homme du métier,
- la Fig. 3 représente un dispositif de commutation selon l'invention, fonctionnant en réception, et
- la Fig. 4 représente un dispositif de commutation selon l'invention, fonctionnant en émission.

### Exposé détaillé d'au moins un mode de réalisation de l'invention

La présente invention concerne un système de communication, parfois appelé réseau de communication par la suite, comprenant des dispositifs de routage de messages de données selon un principe de commutation par paquets. Ces dispositifs de routage, parfois appelé noeuds du réseau par la suite, sont, par exemple, des dispositifs de commutation (en anglais 'switch') ou des processeurs.

Elle est basée sur le principe d'un codage des en-têtes de paquets selon un codage entropique. Ce codage entropique est, par exemple, un codage à longueur variable (en anglais 'run-length encoding'), un codage de type Huffman, ou un codage arithmétique implémenté selon un principe connu de l'homme du métier. Ce codage dynamique agit sur au moins un paramètre de l'en-tête. De préférence, il agit sur l'adresse du noeud de destination, l'adresse du noeud source et la taille du paquet si cette taille n'est pas fixe. Il est a priori moins intéressant de compresser les identificateurs de messages et de paquets. Ainsi, plus une communication d'un paquet ayant un en-tête prédéterminé est fréquente sur un lien de communication entre deux noeuds du réseau, plus ledit en-tête est codé sur un petit nombre de bits grâce au codage entropique. Le codage entropique accroît l'efficacité du système de communication selon l'invention par rapport à l'état de la technique antérieure car il permet en quelque sorte d'avoir un effet mémoire ne se limitant pas au seul paquet précédent.

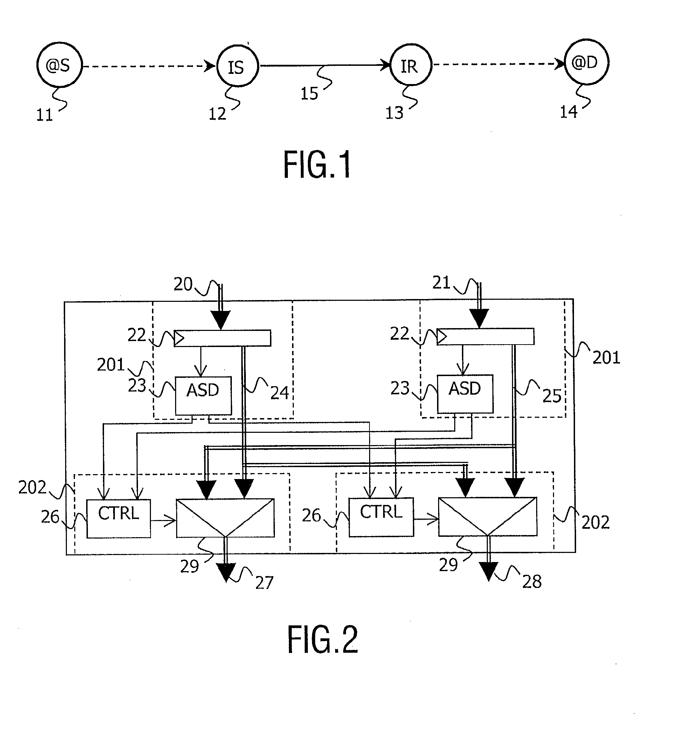

Afin d'expliquer le mode de réalisation de l'invention, considérons la Fig. 1 qui représente une structure simplifiée d'un réseau de communication. Ledit réseau de communication comprend un noeud source (11) d'adresse @S qui envoie un message par paquets à un noeud de destination (14) d'adresse @D. Chaque paquet du message est transmis individuellement et peut suivre différents itinéraires du noeud source vers le noeud destination, certains paquets pouvant, à des instants différents, transiter d'un noeud émetteur intermédiaire (12) vers un noeud récepteur intermédiaire IR (13) via un lien de communication intermédiaire (15). Les lignes en pointillées représentent l'itinéraire d'un paquet via un certain nombre d'autres noeuds intermédiaires. Le noeud émetteur intermédiaire (12) est apte à connaître les messages qu'il envoie sur le lien de communication intermédiaire (15) et la proportion des paquets des messages dont l'adresse du noeud source est @S, dont l'adresse du noeud destination est @D et dont la taille est S. Le noeud récepteur intermédiaire (13) est également apte à connaître les messages qu'il reçoit sur le lien de communication intermédiaire (15) et la proportion des paquets possédant les caractéristiques énoncées ci-dessus. Pour cela, les noeuds intermédiaires émetteur et récepteur utilisent un même procédé de codage entropique de telle manière qu'il n'est pas nécessaire de transmettre des informations relatives à un changement de codage. Le procédé de codage entropique s'appliquant à chaque lien de communication du réseau, un en-tête de paquet comprenant les caractéristiques énoncées ci-dessus, sera compressé avec différents codes selon la fréquence avec laquelle il circule sur les différents liens de communication.

Dans un réseau de communication standard, un dispositif de routage est généralement mis en oeuvre de la façon suivante, décrite à la Fig. 2. Un paquet arrivant au dispositif de routage sur un de ses ports d'entrée (20,21) est stocké dans un registre (22) ou une file d'attente selon le type de réseau de communication. Puis, l'adresse du noeud de destination et les autres paramètres pertinents de l'en-tête du paquet sont envoyés à un décodeur d'adresses ASD (23). Ce décodeur d'adresses décode l'adresse de destination et envoie un signal à un contrôleur CTRL (26) d'un port de sortie (27,28) destiné à délivrer le paquet de données. Les données des paquets (24,25) issues des ports d'entrée (20,21) via le registre (22) sont alors acheminées vers les entrées de multiplexeurs (29), chaque multiplexeur étant commandé par un contrôleur (26) qui lui indique l'entrée qu'il doit sélectionner.

Le cas échéant, le décodeur d'adresses décode d'autres données telles que la taille d'un paquet, si les paquets ne sont pas de taille fixe, afin d'en informer le contrôleur. Le paramètre de taille de paquets est nécessaire au contrôleur, même si les paquets sont de taille fixe, car le contrôleur doit savoir quand une transmission de données commence et quand ladite transmission doit s'arrêter. Certains réseaux de communication utilisent des sous-paquets de taille fixe mais dont le nombre n'est pas fixe dans un paquet. Dans ce cas, l'en-tête de paquets contient des mots de contrôle qui indiquent si le sous-paquet est un premier, un deuxième ou un dernier sous-paquet. Ces mots de contrôle constituent des informations nécessaires au bon fonctionnement du contrôleur.

Certains paramètres de l'en-tête de paquet, comme l'adresse du noeud source par exemple, ne sont pas forcément nécessaires à ce stade. Il apparaîtra cependant à l'homme du métier que les paramètres de l'en-tête de paquet qui sont nécessaires et ceux qui ne le sont pas dépendent des caractéristiques du réseau.

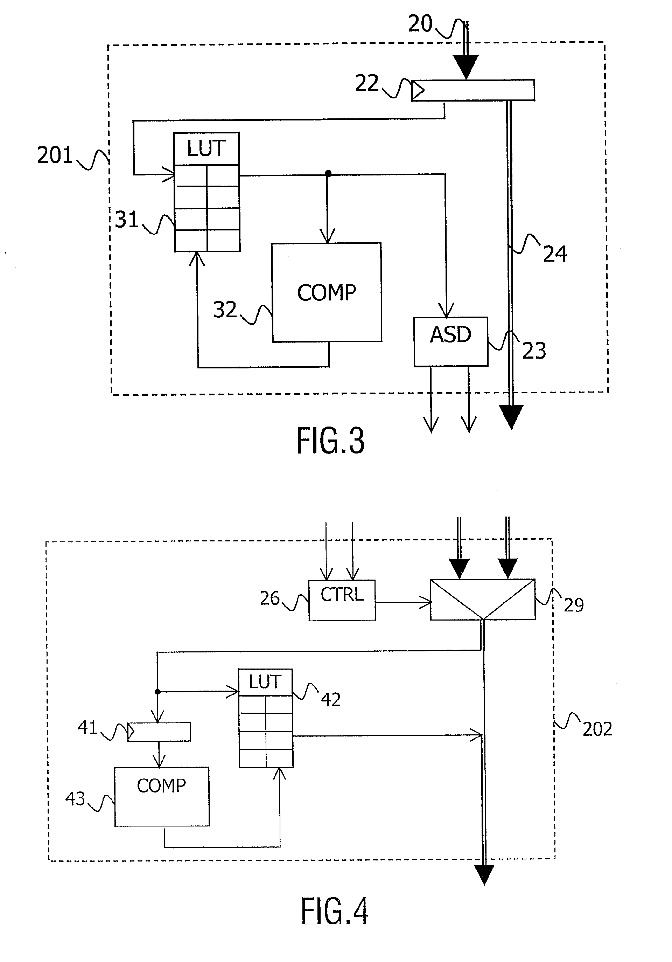

La Fig. 3 représente un dispositif de commutation selon l'invention, ledit dispositif fonctionnant en réception. Pour cela, la partie réceptrice (201) de la Fig. 2 a été modifiée de la façon suivante.

Un paquet arrivant sur un port d'entrée (20) du dispositif de routage est stocké dans un registre (22). Les données du paquet, y compris au moins un paramètre de son en-tête, l'adresse du noeud de destination par exemple, ont été compressées selon un procédé de codage entropique prédéterminé par un concepteur. L'adresse du noeud de destination ainsi codée est envoyée vers des moyens de stockage. Dans le mode de réalisation préféré, les moyens de stockage comprennent une table de mise en correspondance LUT (31) (en anglais 'look-up table'). Cette table est apte à stocker la valeur codée de l'adresse du noeud de destination dans une première colonne, et la valeur complète, i.e. non-codée, de l'adresse du noeud de destination lui correspondant dans une seconde colonne. A une seule valeur codée de l'adresse du noeud de destination selon le codage entropique correspond une et une seule valeur complète de ladite adresse dans la table. La valeur complète de l'adresse est ensuite envoyée à un décodeur d'adresse (23) fonctionnant selon un principe identique à celui décrit précédemment. Cette valeur complète est également lue par des moyens de compression (32). Ces moyens de compression fonctionnent selon le procédé de codage entropique prédéterminé et sont aptes à recoder la valeur complète de l'adresse. Si la valeur recodée issue du codage entropique est différente de la valeur codée présente dans la table, la valeur recodée est stockée à la place de la valeur codée dans la table de mise en correspondance.

La Fig. 4 représente un dispositif de commutation selon l'invention, fonctionnant en émission. Pour cela la partie émettrice (202) de la Fig. 2 a été modifiée de la façon suivante.

Un multiplexeur (29) est commandé par un contrôleur CTRL (26) lui indiquant l'entrée qu'il doit sélectionner afin de transmettre des données. Le dispositif de commutation comprend une table de mise en correspondance LUT (42), apte à stocker une valeur complète de l'adresse du noeud de destination dans une première colonne et sa valeur codée selon le procédé de codage entropique prédéterminé dans une seconde colonne. Il comprend également des moyens de compression (43) selon un codage entropique, aptes à recoder la valeur complète. La table de mise en correspondance permet de changer le codage de l'adresse de destination au fur et à mesure de la circulation des paquets de données. Si la valeur recodée issue du codage entropique est différente de la valeur codée présente dans la table, la valeur recodée est stockée à la place de la valeur codée après transmission de cette dernière. Pour cela, un circuit retardateur (41) permet de retarder la valeur complète de l'adresse, permettant ainsi de ne pas modifier la table avant la transmission de la valeur codée de l'adresse par ladite table sur le lien de communication.

Si les Fig. 4 et 3 sont respectivement les parties émettrice et réceptrice des noeuds intermédiaires d'émission (12) et de réception (13), et comme les moyens de compression mettent en oeuvre le même procédé de codage entropique et reçoivent les mêmes paramètres d'en-tête, les tables de mise en correspondance qui sont contrôlées par ces moyens de compression contiennent les mêmes valeurs à un instant donné.

La présente invention concerne également un procédé de transmission de données dans un système de communication comprenant des dispositifs de routage (11,12,13,14) desdites données. Ledit procédé comprend :
- au niveau d'une partie émettrice d'un premier dispositif de routage (12), une étape de stockage destinée à stocker une valeur d'au moins un paramètre dudit en-tête et à émettre une valeur codée lui correspondant, et une étape de compression selon un codage entropique, destinée à recoder la valeur non-codée, la valeur recodée étant stockée à la place de la valeur codée après transmission de cette dernière sur un lien de communication (15);
- au niveau d'une partie réceptrice d'un second dispositif de routage (13) relié au premier dispositif de routage par le lien de communication (15), une étape de stockage destinée à stocker la valeur codée issue du lien de communication (15) et à émettre la valeur non-codée lui correspondant, et une étape de compression selon le codage entropique, destinée à recoder la valeur non-codée, la valeur recodée étant stockée à la place de la valeur codée.

Aucun signe de référence entre parenthèses dans le présent texte ne doit être interprété de façon limitative. Le verbe "comprendre" et ses conjugaisons doivent également être interprétés de façon large, c'est à dire comme n'excluant pas la présence non seulement d'autres éléments ou étapes que ceux listés après ledit verbe, mais aussi d'une pluralité d'éléments ou d'étapes déjà listés après ledit verbe et précédés du mot "un" ou "une".

## Revendications

1. Système de communication de données comprenant des dispositifs de routage (11,12,13,14) desdites données, reliés entre eux par des liens de communication, les données étant transmises par paquets, un paquet comportant un en-tête, ledit système étant **caractérisé en ce que** :
- une partie émettrice d'un premier dispositif de routage (12) comprend des premiers moyens de stockage (42) aptes à stocker une valeur d'au moins un paramètre dudit en-tête et à émettre une valeur codée lui correspondant, et des premiers moyens de compression (43) selon un codage entropique, aptes à recoder la valeur non-codée, la valeur recodée étant stockée à la place de la valeur codée après transmission de cette dernière sur un lien de communication (15), et
- une partie réceptrice d'un second dispositif de routage (13), relié au premier dispositif de routage par le lien de communication, comprend des seconds moyens de stockage (31) aptes à stocker la valeur codée issue du lien de communication et à émettre la valeur non-codée lui correspondant, et des seconds moyens de compression (32) selon le codage entropique, aptes à recoder la valeur non-codée, la valeur recodée étant stockée à la place de la valeur codée.

2. Système de communication selon la revendication 1, **caractérisé en ce que** les seconds moyens de compression selon un codage entropique comportent en outre un circuit retardateur (41) apte à stocker temporairement la valeur recodée dans l'attente d'une transmission de la valeur codée correspondante.

3. Dispositif de routage (12) apte à émettre des données codées sur un lien de communication (15), les données étant transmises par paquets, un paquet comportant un en-tête, ledit dispositif étant **caractérisé en ce qu'**il comprend :
- des premiers moyens de stockage (42) aptes à stocker une valeur d'au moins un paramètre dudit en-tête et à émettre une valeur codée lui correspondant, et
- des premiers moyens de compression (43) selon un codage entropique, aptes à recoder la valeur non-codée, la valeur recodée étant stockée à la place de la valeur codée après transmission de cette dernière sur le lien de communication.

4. Dispositif de routage selon la revendication 3, **caractérisé en ce que** les seconds moyens de codage entropique comportent en outre un circuit retardateur (41) apte à stocker temporairement la valeur recodée dans l'attente d'une transmission de la valeur codée correspondante.

5. Dispositif de routage (13) apte à recevoir des données codées via un lien de communication (15), les données étant transmises par paquets, un paquet comportant un en-tête, ledit dispositif étant **caractérisé en ce qu'**il comprend :
- des moyens de stockage (31) aptes à stocker une valeur codée selon un codage entropique d'au moins un paramètre dudit en-tête et à émettre une valeur non-codée lui correspondant,
- des moyens de compression (32) selon le codage entropique, aptes à recoder la valeur non-codée, la valeur recodée étant stockée à la place de la valeur codée.

6. Procédé de transmission de données dans un système de communication comprenant des dispositifs de routage (11,12,13,14) desdites données, les données étant transmises par paquets, un paquet comportant un en-tête, ledit procédé étant **caractérisé en ce qu'**il comprend :
- au niveau d'une partie émettrice d'un premier dispositif de routage (12), les étapes de stockage destinée à stocker une valeur d'au moins un paramètre dudit en-tête et à émettre une valeur codée lui correspondant, et de compression selon un codage entropique, destinée à recoder la valeur non-codée, la valeur recodée étant stockée à la place de la valeur codée après transmission de cette dernière sur un lien de communication (15), et
- au niveau d'une partie réceptrice d'un second dispositif de routage (13) relié au premier dispositif de routage par le lien de communication, les étapes de stockage destinée à stocker la valeur codée issue du lien de communication et à émettre la valeur non-codée lui correspondant, et de compression selon le codage entropique, destinée à recoder la valeur non-codée, la valeur recodée étant stockée à la place de la valeur codée.
